# EUROPEAN PATENT APPLICATION

(11) **EP 4 787 013 A1**
(43) Date of publication of application: **05.08.2026**
(21) Application number: 26154491.0
(22) Date of filing: 27.01.2026
(51) Int. Cl.: G01S 7/484, G01S 7/4861, G01S 7/4865, G01S 17/10

(54) **REFERENCE DETECTION IN RANGING FRONT-END SYSTEMS**

(30) Priority: 30.01.2025 US 202519041670
(71) Applicant: Avago Technologies International Sales Pte. Limited, Singapore 768923 (SG)
(72) Inventor: Khanpour, Mehdi, Newport Beach, 92660 (US); Vakilian, Kambiz, Irvine, 92603 (US)
(74) Representative: Dilg, Haeusler, Schindelmann Patentanwaltsgesellschaft mbH

(57) **Abstract**

A circuit including a first input, a photodetector, and a single ended to differential converter. The first input is to receive a transmission pulse. The photodetector is to receive a reflected light pulse. The single ended to differential converter includes a second input and an output. The second input is electrically connected to the first input and the photodetector. The output outputs an electrical signal comprising a first signal based on the transmission pulse and a second signal based on the reflected light pulse.

## Description

### BACKGROUND

In time of flight (ToF) ranging systems, such as LIDAR systems, a pulse is transmitted from the system. The pulse may be reflected from an object in a surrounding environment. The delay between the transmitted pulse and the received pulse may be measured as an indicator of the distance to the object.

### BRIEF DESCRIPTION OF THE DRAWINGS

The accompanying drawings illustrate examples of the disclosure and, together with the description, explain principles of the examples.
FIG. 1 illustrates an example ToF ranging system, in accordance with one or more embodiments of the disclosure.
FIG. 2 illustrates an example ToF ranging system, in accordance with one or more embodiments of the disclosure.
FIG. 3 illustrates an example ToF ranging system, in accordance with one or more embodiments of the disclosure.
FIG. 4 illustrates an example manufacturing process for a ToF ranging system, in accordance with one or more embodiments of the disclosure.

### DETAILED DESCRIPTION

The following describes technical solutions in this specification with reference to the accompanying drawings. Exemplary embodiments are described in detail with reference to the accompanying drawings.

The terminology used herein is for describing various examples only and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.

Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

Convention ToF systems often use a duplicated front-end path and analog to digital converter (ADC) for reference signals. Thus, a convention system may include a first digital output for reflected pulse signals and a second digital output for reference pulse signals. Accuracy of measurement in such systems may depend on synchronization between the two ADC channels. For example, in some LIDAR system, the needed synchronization may be on the order of picoseconds.

The described technology may address these and other challenges by providing a ToF front-end system including an output that includes both a reference pulse and a reflection pulse. For instance, a single ended to differential converter may sum reference and reflection signals to generate a differential signal including both reference pulses and reflection pulses on a common channel. An ADC may convert this differential signal to provide a digital receiver output including reference pulses and reflection pulses on a common digital channel. The technology may reduce costs of ToF ranging systems by reducing hardware duplication (e.g., by avoiding a duplicated reference path/ADC). Further, the technology may improve accuracy of ToF ranging systems by avoiding the need to synchronize separate reference and reflection signals. Additionally, the technology may improve ranging accuracy by avoiding systematic/random mismatches between reference and reflection paths.

The described technology may be implemented in integrated systems and discrete range detection systems with any sensing modality, such as LIDAR, RADAR, etc. The described technology may be implemented in any deployment, such as a vehicular ranging system, a robotic system, a cellphone, an environmental sensor, etc. For instance, the described technology may be implemented in an automotive LIDAR system, such as for obstacle detection, self-driving, navigation, parking, adaptive cruise control, etc.

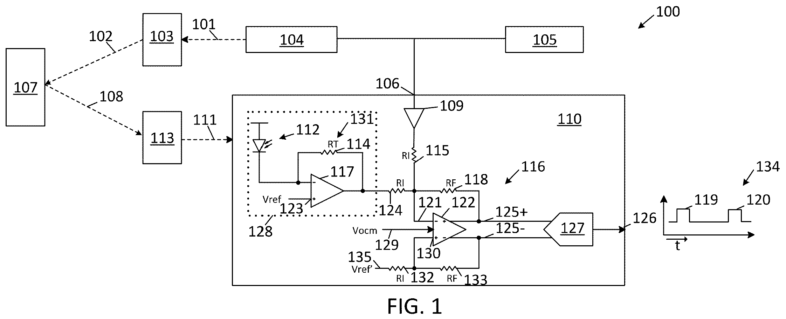

FIG. 1 illustrates an example ToF ranging system 100. For example, system 100 may comprise a lidar ("light detection and ranging") system, radar ("radio detection and ranging") system, or the like. System 100 may include a light source 104 with a corresponding controller 105 and a front-end circuit 110. In some implementations, light source 104, controller 105, and circuit 110 may comprise discrete components. In further implementation, some or all of light source 104, 105, 110 may be devices on a common semiconductor substrate, etc.

Ranging system 100 may include a light source 104 to emit a pulsed light signal 101. For example, energy source 104 may comprise a laser diode, light-emitting diode (LED), or other semiconductor visible light source, a radio wave source, a terahertz source, a microwave source, or other electromagnetic energy source. Responsive to a control signal from a controller 105, light source 104 emits pulsed light signal 101 which travels via an optical transmission path through a first aperture 103 to reflect off an object 107 in an environment. Reflected light travels back to system 100 via a reflected path 108 through a second aperture 113 to be received as a reflected pulsed signal 111. For example, light source 104 may comprise a laser diode 104 optically connected to a transmission lens 103 and a reception lens 113.

Ranging system 100 may include a front-end circuit 110 to output a digital signal 134. Digital signal 134 comprises a first digital pulse 119 corresponding to a transmitted light pulse (e.g., emitted at *t₀*) and a second digital pulse 120 corresponding to a received reflected light pulse (e.g., received at *tᵣ*)*.* Accordingly, digital signal 134 may include reference pulses 119 and reflected pulses 120 and the distance between system 100 and object 107 may be determined based on a delay between pulse 119 and pulse 120.

In some examples, circuit 110 may include a first input 106 to receive a transmission pulse. In the illustrated example, first input 106 is an electrical input 106 to receive a control signal for light source 104. The control signal may comprise a voltage pulse output by a controller 105 to trigger light source 104 to emit a light pulse. For example, controller 105 may comprise a microcontroller 105 to control light source 104. In some cases, input 106 may include a buffer 109. For example, buffer 109 may electrically isolate circuit 110 from light source controller 105 (e.g., to reduce load on the controller 105), condition the transmission pulse (e.g., change the impedance, prevent signal loss, etc.), etc.

Circuit 110 may include a photodetector 128 to receive a reflected light pulse 111. For example, photodetector 128 may comprise a photodiode 112 connected to a transimpedance amplifier (TIA) 131. For example, photodiode 112 may be connected to an inverting input of an operational amplifier (opamp) 117 with a feedback resistor 114 providing gain control and a reference voltage 123 connected to a non-inverting input to provide a reference voltage level the photodetector output. As other examples, photodetector 128 may comprise a radar transceiver circuit, a phototransistor detector circuit, quantum dot photodetector, etc.

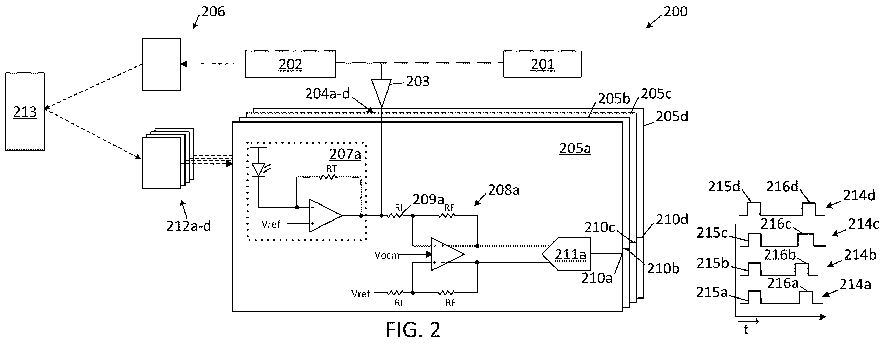

Circuit 110 may include a single ended to differential converter 116. Converter 116 may include a second input 121 (converter input 121) connected to first input 106 (circuit input 106) and to photodetector 128. Converter 116 may include any circuitry to receive single-ended signals (e.g., voltage pulses from input 106/buffer 109 and photodetector 128) and to output differential signals via differential outputs 125+/-. For example, converter 116 may include a differential opamp 122 having an inverting input 121, a non-inverting input 130, and an output common mode voltage (V_{ocm}) input 129. Converter 116 may further comprise feedback resistors 118, 133 and input resistors 124, 115, 132, as illustrated. For example, in the illustrated configuration, Vₒᵤₜ=Vₒᵤₜ₊-Vₒᵤₜ-=(RF/RI)(Vᵢₙ-V_{ref}), where Vₒᵤₜ is the voltage across outputs 125+/-, RF is the resistance of feedback resistors 118, 133, RI is the input of input resistors 124, 115 132, Vᵢₙ is the input voltage (e.g., the voltage input to input resistors 124, 115) and V_{ref} is the reference voltage 123. In this illustrated example, input 106 is connected to a first input resistor 115 and photodetector 128 is connected to a second input resistor 124, where the two input resistors 115, 124 have a common resistance. Other examples may include any other suitable arrangement, such as the design illustrated with respect to circuits 205a-d of FIG. 2.

In some examples, one of the inputs 121, 130 is connected to a voltage pulse source (e.g., photodetector 128, input 106) and the other of the inputs 121, 130 is connected to a reference voltage source 135. The reference voltage 135 may comprise any suitable signal, including a ground voltage. As on example, the reference voltage 135 may be connected to the same voltage domain as reference voltage 123, which is also input to TIA 131. V_{ocm} input 129 may establish an output common mode voltage for a differential signal output at differential output 125+/-. For instance, V_{ocm} input 129 may be set to a voltage based on a particular input common mode voltage for a digital converter 127.

In some examples, circuit 110 may output an analog differential signal and outputs 125+/- may provide circuit output 126. In other examples, such as illustrated, circuit 110 may comprise a digital output 126. In such examples, circuit 110 may comprise an analog-to-digital converter (ADC) 127. Digital output 126 may output a digital signal 134 comprising a first digital signal 119 (e.g., a reference signal 119) and a second digital signal 120.

As an example of operation over a pulse out/pulse in cycle, controller 105 may output a transmission pulse comprising a control voltage pulse that is received by light source 104 and input 106 (e.g., at buffer 109). The control voltage pulse may be converted to a differential reference signal via differential converter 116. The differential reference signal may be converted to a digital reference pulse 119. Accordingly, the timing of the digital reference pulse 119 may correspond to the timing of the light pulse 101 emitted by light source 104.

In this example, after reflection off an object 107, a reflected light pulse 111 is received by photodiode 112 and amplified by TIA 131 to produce a second voltage pulse corresponding to the reflected light pulse. This voltage pulse may be converted to a second differential pulse by converter 116. ADC 127 may then output a second digital pulse 120 (at *tᵣ*) corresponding to the reflected light pulse 111 (e.g., reflected pulse 120). The delay between reference pulse 119 and reflected pulse 120 may correspond to distance traveled by the light pulse 101, and thus, the distance to object 107. For instance, digital output 126 may be connected to a digital signal processor (DSP) or other processing circuit to analyze. In some examples, various sources of measurement uncertainty may be accommodated via digital processing. For instance, the timing for light source 104 to emit the light pulse 101 may be different than the time for buffer 109 to emit its corresponding output pulse. This timing difference may be predetermined, measured during a calibration, etc., and may be used to calibrate the timing of reference signal 119. Similarly, timing delays introduced by the photodetector 128 may be used to calibrate the timing of reflected signal 120. Circuit 110 may include various other componentry for such timing calibration. For example, circuit 110 may include temperature sensors for calibrating to reduce temperature induced timing variability.

FIG. 2 illustrates an example multi-channel ranging system 200. In this example, reflected pulses from an object 204 may be measured by a plurality of front-end circuits 205a-d. For example, system may include 2, 4, ..., 32, 64, etc. circuits 205a-d to provide a corresponding number of digital output channels 210a-d. In system 200, response to a common control signal generated by a controller 201, light source 202 emits one or more light pulses and multiple reflected pulses are measured. For example, light source 202 may comprise a single pulsed light source (e.g., a laser diode, etc.) transmitted through an aperture 206 (e.g., a transmission lens). Reflections off an object 213 (or multiple different objects 213) from light source 202 may be received via multiple apertures 212-a-d. As another example, light source 202 may comprise a laser array to emit multiple pulses, whose reflections may be received by circuits 205a-d (e.g., the number of reception channels may be equal to or different from the number of laser pulses).

Circuits 205a-d may be implemented as described with respect to circuit 110 of FIG. 1. For ease of illustration, circuits 205a-205d are illustrated as stacked to represent their multiplicity. Accordingly, some circuit components are illustrated only with respect to circuit 205a (e.g., photodetector 207a is illustrated without photodetectors 207b-d). In these instances, the presence of respective like components in circuits 205b-d should be understood. Of course, this does not imply that circuits 205a-d are implemented in the same manner. In various implementations, different instances of circuit 205 may use the same or different componentry/designs.

In the illustrated example, a buffer 203 is electrically connected to controller 201 and light source 202 to receive a control signal for light source 202. Buffer 203 is connected to corresponding inputs 204a-d for circuits 205a-d. Accordingly, each circuit 205a-d may receive a voltage pulse corresponding to the control signal from buffer 203. This voltage pulse may then serve as a reference pulse for each circuit 205a-d.

For example, each circuit 205a-d may include a respective photodetector 207a-d. Photodetectors 207a-d may be implemented as described with respect to 128 and may include, for example, a respective photodiode and TIA, etc. Circuits 205a-d may further include respective single ended to differential converters 208a-d. Converters 208a-d may be implemented as described with respect to converter 116. For example, converters 208a-d may comprise respective differential amplifiers with input and feedback resistors as described with respect to FIG. 1. Inputs 204a-d are connected to inputs 209a-d of respective converters 208a-d. In the illustrated example, photodetectors 207a-d and inputs 204a-d are connected in parallel to common input resistors 209a-d. In other examples, photodetectors 207a-d may be connected to first respective input resistors and inputs 204a-d may be connected to second respective input resistors (e.g., as illustrated in FIG. 1).

In the illustrated example, circuits 205a-d may include respective ADCs 211a-d and may have corresponding digital outputs 210a-d. Each output 210a-d may output a corresponding digital output signal 214a-d. Each respective digital output signal 214a-d may include a first digital signal 215a-d corresponding to a first signal received via input 204a-d and a second digital signal 216a-d corresponding to a second signal received via photodetector 207a-d. Each first digital signal 215a-d may correspond to a common control signal issued by controller 201, which was distributed to circuits 205a-205d. Accordingly, the first digital signals 215a-d may arrive at a common time t₀ and may share common features (e.g., amplitude, pulse length, etc.). Each second digital signal 216a-d corresponds to a reflection that traveled via a different optical path. Accordingly, digital signals 216a-d may differ in various respects. For example, signal pulses 216a-d may have different amplitudes, pulse lengths, arrival times, etc. Such differences may reflect various properties, such as acceleration/deceleration of the system 200 (e.g., in a vehicle, robot, etc.), material characteristics of object 213 (e.g., pulse length variance based on density variance, etc.), dimensions of the object 213, etc. As signals 214a-d include synchronized pulses 215a-d, comparisons between signals 214-a-d may be more precise than a system without combined reference and reflection signals. In other examples, circuits 205a-d may include other outputs, as described with respect to examples of circuit 110. For example, circuits 205a-d may output differential analog signals from converters 208a-d.

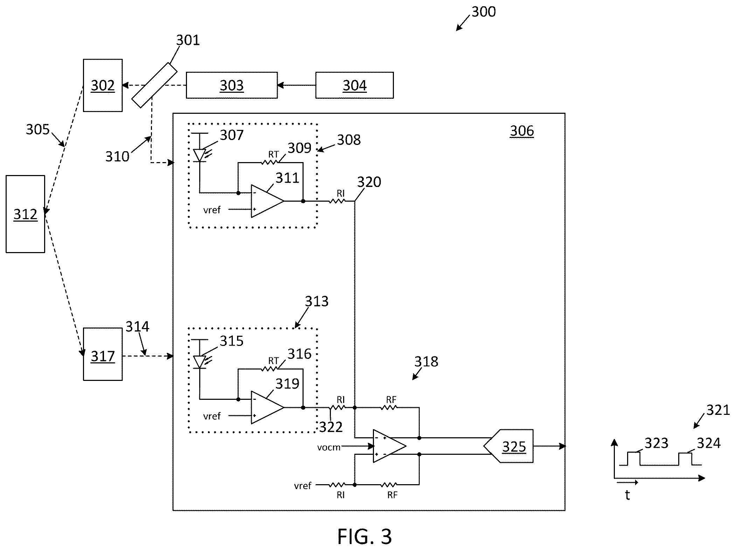

FIG. 3 illustrates an example ranging system 300. For example, system 300 may comprise a lidar ("light detection and ranging") system, radar ("radio detection and ranging") system, or the like. For example, ranging system 300 may comprise a vehicular ranging system, robotic system, cellphone, etc. System 300 may be implemented generally as described with respect to the above examples, such as system 100. Compared to system 100, circuit 306 is optically connected to light source 303 to receive a transmission pulse as a light pulse. Additionally, while illustrated as a single circuit 306, circuit 306 may be one of a plurality of such circuits, as discussed with respect to FIG. 2.

Example system 300 may include a controller 304 connected to a light source 303. For example, controller 304 and light source 303 may be implemented as described with respect to controller 105 and light source 104 of FIG. 1. In this example, a beam splitter 301 is optically connected to light source 304 between light source 304 and transmission aperture 302. Beam splitter 301 may split the output light emitted by light source 304 into a reference light pulse 310 and an external light pulse 305. In some examples, beam splitter 301 may comprise a proportional beam splitter such that external light pulse 305 has a higher optical power than internal pulse 310 (e.g., beam splitter 302 might divert 5-10%, etc. of the light output as internal pulse 310). External light pulse 305 may reflect off of an object 312 and return to system 300 as a reflected light pulse 314.

Example circuit 306 may include a first optical input including a first photodetector 308 to receive the reference light pulse 310. Example system 300 may further include a second optical input including a second photodetector 313 to receive reflected light pulse 314 (e.g., via an aperture 317). First and second photodetectors 308, 313 may include similar componentry, such as respective photodiodes 307, 315, and respective TIAs (e.g., respective opamps 311, 319, respective feedback resistors 309, 316, etc.). For example, photodetectors 308, 131 may be implemented as described with respect to photodetector 128 of FIG. 1. In some examples, photodetectors 308, 313 are implemented with similar electrical/optical characteristics. For instance, photodiodes 307, 315 may have similar responsivity, I-V characteristics, etc. As another example, opamps 311, 319 may have similar performance characteristics, the reference voltages may be the same, feedback resistors 309, 316 may have a common resistance value, etc. In other implementations, photodetectors 308, 313 may have different characteristics. For instance, photodetector 308 may have a different level of gain than photodetector 313 (e.g., resistors 309, 316 may have different resistances), photodiodes 307, 315 may have different performance characteristics, etc.

Example circuit 306 may further include a single ended to differential converter 318. Converter 318 may be implemented as described with respect to converter 116 of FIG. 1. For example, photodetector 308 may be connected to a first input resistor 320 and photodetector may be connected to a second input resistor 322. In other examples, converter 318 may be implemented as described with respect to converters 208a-d (e.g., may comprise a single input resistor shared by both photodetectors 308, 313).

As illustrated, converter 318 may output a differential signal comprising a sum of a first differential pulse corresponding to the reference light pulse 310 and a second differential pulse corresponding to the reflected light pulse 314. In some examples, circuit 306 provide the differential signal as an output (e.g., as an analog differential output signal). In further examples, circuit 306 may include an ADC 325 to generate a digital output signal 321 based on the differential signal. For example, ADC 325 may be implemented as described with respect to ADC 127 of FIG. 1. Digital output signal 321 may include a first digital signal 323 (e.g., a first pulse) corresponding to reference light pulse 310 and a second digital signal 324 corresponding to reflected light pulse 314. The delay between digital signals 323, 324 may thereby be indicative of the time between light pulses 310, 314 and the distance that external beam 305 traveled, from which a distance to object 312 may be determined.

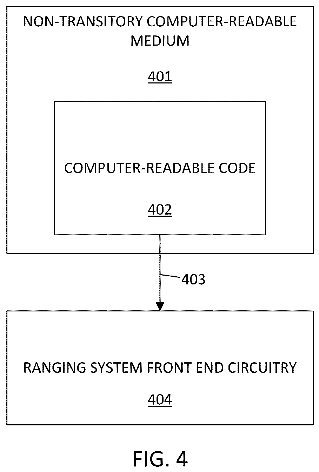

FIG. 4 illustrates an example manufacturing process for ranging system front-end circuitry. For instance, FIG. 4 may illustrate aspects of manufacturing ranging system front end circuitry 404, such as circuitry 110, 205a-d, 306, or other circuitry described herein.

The process may include providing a computer-readable medium 401 storing computer-readable code 402 for fabrication of the ranging system front-end circuitry 404 according to any of the above examples. Computer-readable code 402 can be stored in any non-transitory computer-readable medium 401 such as a semiconductor medium, solid-state medium, magnetic medium, optical medium, etc. For example, computer-readable medium 401 might comprise a memory device, storage device, registers (e.g., static RAM), cache device, etc.

In some configurations, the computer-readable code 402 is used at one or more stages of a semiconductor design and fabrication process 403, including an electronic design automation (EDA) stage, to fabricate 403 an integrated circuit 404. The computer-readable code 402 may additionally or alternatively enable the definition, modelling, simulation, verification and/or testing of an apparatus embodying the concepts described herein.

For example, the computer-readable code 402 can be embodied in code defining a hardware description language (HDL) representation of the circuitry 404. For example, the code may define a register-transfer-level (RTL) abstraction of one or more logic circuits for defining an apparatus embodying the concepts. The code may define an HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code 402 may provide definitions embodying the circuitry using system-level modelling languages such as SystemC and SystemVerilog or other behavioral representations of the concepts that can be interpreted by a computer to enable simulation, functional and/or formal verification, and testing of the circuitry.

In some examples, the computer-readable code 402 may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication 403 of an apparatus embodying the invention. In some examples, the one or more logic synthesis processes can generate from the computer-readable code 402 a bitstream to be loaded into a field programmable gate array (FPGA) to configure the FPGA to implement the described circuitry 404. The FPGA may be deployed for the purposes of verification and test of the concepts prior to fabrication 403 in an integrated circuit or the FPGA may be deployed in a product directly.

Circuitry 404 may be manufactured in any suitable form. For example, circuitry 404 may be manufactured as a discrete device component, as a circuit within a larger ranging system circuit, such as an ASIC (application specific integrated circuit), system on a chip (SoC), etc. Circuitry 404 may include any other components such as a light source controller, a light source (e.g., a semiconductor laser diode), a DSP, processor, etc. In examples where circuitry 404 comprises multiple instances of front-end circuitry (e.g., as described with respect to FIG. 2), such instances may be included on a common substrate, may be provided as discrete components, etc.

Those skilled in the art will also appreciate the arrangement or interconnection of components such as "coupled," "connected," "on," "under," or similar wording allows for indirect connections, or intervening components or layers.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") when preceded by terms of exclusivity, such as, e.g., "either," "only one of," or "exactly one of."

The articles "a," "an," and "the" are intended to include the plural forms as well, unless the context clearly indicates otherwise.

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, unless context indicates otherwise, ordinal numbers (e.g., first, second, third, etc.) may be used as an adjective for an element (i.e., any noun in the application). Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology. Rather, the use of ordinal numbers is to distinguish between the elements.

By way of an example, a first element is distinct from a second element, and the first element may encompass more than one element and succeed (or precede) the second element in an ordering of elements. Thus, a first member, component, region, layer, or section referred to in examples described herein may also be referred to as a second member, component, region, layer, or section without departing from the teachings of the examples.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

## Claims

1. A circuit, comprising:
a first input to receive a transmission pulse;
a photodetector to receive a reflected light pulse; and
a single ended to differential converter comprising:
a second input electrically connected to the first input and the photodetector, and
an output to output an electrical signal comprising a first signal based on the transmission pulse and a second signal based on the reflected light pulse.

2. The circuit of claim 1, wherein:
the first input comprises an electrical input, and
the transmission pulse comprises a control signal for a light source.

3. The circuit of claim 2, further comprising
a controller to generate the control signal, wherein the controller is connected to the electrical input and the light source.

4. The circuit of claim 2 or 3, wherein
the first input comprises a buffer.

5. The circuit of any one of the preceding claims 1 to 4, wherein:
the first input comprises a second photodetector electrically connected to the second input, and
the transmission pulse comprises a light pulse emitted by a light source.

6. The circuit of any one of the preceding claims 1 to 5, further comprising:
a first resistor connected between the photodetector and the second input; and
a second resistor connected between the first input and the second input;
wherein the first resistor and the second resistor have a common resistance value.

7. The circuit of any one of the preceding claims 1 to 6, further comprising:
a resistor connected to the first input and connected to the first input and the photodetector in parallel.

8. The circuit of any one of the preceding claims 1 to 7, further comprising:
an analog to digital converter electrically connected to the output to generate a digital output signal comprising a first digital signal based on the first signal, and a second digital signal based on the second signal.

9. The circuit of claim 8, wherein:
a delay between the first digital signal and the second digital signal corresponds to a time between transmitting an emitted light pulse and receiving the reflected light pulse.

10. A system, comprising:
a light pulse source comprising a light source and a controller;
a first input to receive a transmission pulse from the light source;
a photodetector to receive a reflected light pulse; and
a single ended to differential converter comprising:
a second input electrically connected to the first input and the photodetector, and
an output to output an electrical signal comprising a first signal based on the transmission pulse and a second signal based on the reflected light pulse.

11. The system of claim 10, further comprising:
a plurality of circuits, wherein one of the plurality of the circuits comprises the first input, the photodetector, and the single ended to differential converter, and wherein each other respective circuit of the plurality of circuits comprises:
a respective first input to receive the transmission pulse from the light pulse source;
a respective photodetector to receive a respective reflected light pulse; and
a respective single ended to differential converter comprising:
a respective second input electrically connected to the first input and the photodetector, and
a respective output to output a respective electrical signal comprising a respective first signal based on the transmission pulse and a respective second signal based on the respective reflected light pulse.

12. The system of claim 11, wherein
each respective circuit of the plurality of circuits comprises a respective analog to digital converter;
and/or
the system further comprises:
a buffer connected to the controller and to the respective first inputs of the plurality of circuits.

13. The system of any one of the preceding claims 10 to 12, wherein:
the first input comprises an electrical input electrically connected to the controller, and
the transmission pulse comprises a control signal for the light source.

14. The system of any one of the preceding claims 10 to 13, wherein:
the first input comprises a second photodetector electrically connected to the second input, and
the transmission pulse comprises a light pulse emitted by a light source;
wherein in particular
the system further comprises:
a transmission lens, wherein the second photodetector is optically connected between the light source and the transmission lens.

15. A non-transitory computer-readable medium comprising stored instructions to manufacture a circuit any one of the preceding claims 1 to 9 and/or a system of any one of the claims 10 to 14.
